# EUROPEAN PATENT APPLICATION

(11) **EP 2 063 512 A1**
(43) Date of publication of application: **27.05.2009**
(21) Application number: 07121190.8
(22) Date of filing: 21.11.2007
(51) Int. Cl.: H02G 15/064, H02G 3/22

(54) **A method of producing an electric power device, and an electric power device**

(71) Applicant: ABB Research Ltd., 8050 Zürich (CH)
(72) Inventor: Roseen, Patrik, 724 63, Västerås (SE); Skryten, Pål Kristian, 3714, Skien (NO); Bjørtuft, Tom-Rune, 3940, Porsgrunn (NO); Espeseth, Robert, 3714, Skien (NO); Granhaug, Ole, 3723, Skien (NO)
(74) Representative: Dahlstrand, Björn

(57) **Abstract**

A method of producing an electric power device comprising a tubular shell (2) of an electrically insulating polymer in which there is provided a screen (12) of an electrically conducting material, wherein said screen (12) is placed in a mould, the mould is filled with a resin, and the resin is permitted to solidify in said mould. The screen (12) is positioned in said mould such that a peripheral surface (13) thereof is in supporting contact with a part of said mould.

## Description

### TECHNICAL FIELD

The present invention relates to a method of producing an electric power device comprising a tubular shell of an electrically insulating polymer in which there is provided a screen of an electrically conducting material, wherein; said screen is placed in a mould; the mould is filled with a resin; and the resin is permitted to solidify around said screen in said mould. The invention also relates to an electric power device produced in accordance with the method according to the invention.

It is preferred, but not necessary, that the inventive device is a bushing used for connecting a cable to any further electric power equipment, or a canister in which a fuse is inserted from outside a container in which electric power equipment may be housed.

The container through the wall of which a device according to the invention is to protrude may house electric power equipment such as electric switchgears, breakers, transformers, etc.

Medium or high voltage is referred to as voltages of 1 kV and above.

### BACKGROUND OF THE INVENTION

Electric cable connection devices like the one initially defined have, according to prior art, used an insulation part made of a thermosetting resin like epoxy, moulded directly on and forming a sleeve or bushing on the contact part and leaving a free end of the contact part for connection to a mating end of a cable. The thickness of the epoxy bushing has been adapted to the need of insulation capacity thereof in relation to an earthed element formed by a wall of an electric station protruded by the device. And since epoxy sets with small geometric tolerances, there has been no problem of achieving the required thickness for applications within the intermediate and high voltage field.

Subsequently to the interconnecting of the contact part and cable, an outer further insulating member, normally made of rubber and earthed, has been positioned like a sleeve or sock surrounding the mating ends of the contact part and cable, and also surrounding the end of the insulation part of the electric connection device. Over time the shape and outer dimension of the insulating part and the shape and dimension of the further insulating member have become worldwide standard.

Also the canisters of fuse-canisters of prior art has made use of an insulation part made of solid epoxy of a thickness sufficient to prevent short circuits from appearing between the voltage-carrying part and an earthed wall of an electric station protruded by the canister.

In order to achieve a less costly manufacture of the connection device, it has been conceived to use a thermoplastic resin instead of a thermosetting resin which is the more expensive one. Thereby, thin-walled bushings and fuse canisters have been suggested, wherein thermoplastic resin has been used instead of thermosetting resin for the forming thereof. The design of such a device preferably include the provision of an outer shell having a spacing between its inner periphery and the outer periphery of a central part that carries a voltage-carrying element such as a conductor. Thereby, a less heavy and less expensive device may be produced. Preferably, injection moulding is used when moulding said device.

Bushings as well as fuse-canisters often comprise a shield or screen of an electrically conducting material arranged for the purpose of suppressing or controlling an electric field generated by and extending around the voltage-carrying element in said bushing or canister. Typically, such a screen is formed by an annular piece of electrically conducting material, such as metal or conducting polymer, which is placed in a mould in which the polymer resin of the bushing or canister to be formed is then moulded and permitted to solidify. Thereby, the screen is embedded in a mass of polymer. However, the moulding of a thermoplastic resin preferably makes use of elevated moulding pressures, higher than those used during moulding of thermosetting resins, and, therefore, retaining the screen in the mould may be rather difficult. When moulding a thermosetting resin, at lower pressures, conducting threads for the electric connection of the screen to further equipment or to ground may be used for holding the screen in the mould. However, the elevated pressures used during moulding of thermoplastic resins will require further retaining elements. Either, there will be an open pocket or hole in the moulded body where a screen retainer has been located during moulding, or there will be a risk of having a position-displacement of said screen during moulding (if no extra retainer is used).

There has also been suggested by prior art to let the moulding operation leave a pocket in the moulding body in which the screen is to be inserted after said moulding, or to process such a pocket after the moulding and then insert said screen therein. However, both these approaches include extra work and extra costs to the manufacturing process, and will also require that a hole or opening is post-filled when the screen has been inserted.

### THE OBJECT OF THE INVENTION

It is an object to present a method as initially defined by means of which the above-mentioned drawbacks of prior art is at least partially remedied.

### SUMMARY OF THE INVENTION

The object of the invention is achieved by means of the initially defined method, characterised in that the screen is positioned in said mould such that a peripheral surface thereof is in supporting contact with a part of said mould. Thereby, the need of extra retainers for the holding of the screen may be avoided, and a very firm positioning of the screen will be enabled. After solidification of the resin forming said shell, the screen, or at least a part thereof or connected thereto, will be firmly held by the surrounding shell material. Accordingly, the resin solidifies around at least a part of the screen or a holder connected thereto, such that the screen will be firmly held in position by the shell.

According to a preferred embodiment, the part of the mould against which the screen is in supporting contact is a core part thereof. Since the screen and the outer shell in which it is to be embedded will be positioned such as to enclose a voltage-carrying element with a spacing between the screen, shell and said element, it will be a natural measure during moulding to have a core located in the region in which said spacing is to be generated. Such a core will form a stable supporting element for the shell as well as the screen during moulding. Accordingly, it is preferred that it is an inner peripheral surface of the screen that is arranged in supporting contact with said part of the mould. However, solutions in which an outer periphery of a screen is permitted to be in supporting contact with an inner periphery of the mould, for example the inner periphery of a tubular core, are also conceived, depending on the individual design of the device.

It is preferred that said screen is formed by an annular element. Preferably, the screen defines a tubular element. The screen should be shorter than the shell, in which, preferably, it is embedded, such that its opposite ends are embedded in and covered by the surrounding shell material. Thereby, the functionality of the screen will be guaranteed, and, since it is embedded at its ends, the chance of having partial discharges emanating from those regions during later use of the device is reduced.

According to one embodiment of the invention, subsequent to the moulding and solidification of the resin, the part of the mould against which the screen has been in supporting contact during moulding is removed from the screen, after which the exposed surface of the screen is covered by an electrically insulating material. This might seem to be a further step that makes the suggested inventive method less advantageous. However, as will be explained later, this step might be regarded as a measure that would be taken anyhow, irrespective of whether the contact surface of the screen has been exposed or not, in order to prevent electric discharges between a voltage-carrying element and a grounded element such as a wall in which the inventive device is to be mounted during use thereof.

According to a preferred embodiment, said tubular shell surrounds a central part of said power device in which a voltage-carrying element of an electrically conducting material is to be housed, and the surface with which said screen is in supporting contact with said part of the mould faces said central part and is remote from the latter.

It is preferred that, after removal of said part of the mould, a spacing between said surface of the screen and said central part is filled with an electrically insulating material other than said thermoplastic polymer. Thereby, electric discharges between the voltage-carrying part and any grounded construction to which the device will be connected during use thereof are further prevented, and, simultaneously, the screen becomes fully embedded. It should be understood that the insulating material, the filler material, that is post-mounted into said spacing preferably extends over the whole length of the screen as seen in the longitudinal direction of the shell, and that it fills the entire cross-section of said spacing, leaving no voids or air pockets between the location of a voltage-carrying element and the screen. Accordingly, the filler will cover the surface of the screen that has been exposed as a result of the removal of said part of the mould after solidification of the resin, and the screen will be fully embedded in surrounding electrically insulating material.

The further electrically insulating material may be introduced into said spacing in a liquid state and let be solidified therein, thereby guaranteeing a complete filling of the empty space, or be introduced in a solid state, for example in the shape of a rubber body, the geometric shape of which matches the geometry of said empty space such that it fills said space, in particular the entire cross section thereof along a certain length thereof, as seen in the longitudinal direction of the tubular shell.

It is preferred that the resin is introduced into the mould under elevated pressure, and, in particular, it is preferred that said resin is introduced into the mould through an injection moulding process. Such a process is well suited for the production of thin-walled polymer products and often favourable from an economic point of view. It will, for example promote a complete filling of the empty space in the mould with resin. Elevated pressure, is referred to as a pressure substantially above the pressure of the surrounding atmosphere.

According to a preferred embodiment, said resin is a thermoplastic resin. Though thermosetting resins may be conceived, thermoplastic resins are preferred both from a technical point of view and an economical point of view.

The object of the invention is also achieved by means of a device produced in accordance with the method of the invention. Such a device comprises a tubular shell in which there is provided a screen, wherein the screen is arranged so as to suppress an electric field and to prevent the upcoming of discharges between a voltage carrying element and a grounded element, such as a wall through which the device extends when in its operational position. Typically, but not necessarily, said device is a device for electric connection to an energy supply conductor for medium and high voltage. Such a device may comprise: a voltage-carrying element; a tubular shell, corresponding to the above-mentioned tubular shell and formed by a polymer and connected to the voltage carrying element. Preferably, the voltage-carrying element extends in a longitudinal direction of said tubular shell, or at least generates an electric field enclosed by said shell, wherein, at least along a part of the length of the voltage-carrying element, the outer shell extends in said longitudinal direction with a space between its inner periphery and an outer periphery of the voltage-carrying element. A part of the device, preferably said outer shell, is provided with an outer contact surface to be connected to a wall of a container, preferably somewhere along said part of the length of the voltage-carrying element. Preferably, said outer shell is arranged so as to separate said space from an atmosphere outside a container to which said device may be connected.

Further features and advantages of the present invention will be shown the following detailed description of preferred embodiments of the invention.

### BRIEF DESCRIPTION OF THE DRAWINGS

Preferred embodiments of the invention will now be further described, by way of example, with reference to the annexed drawing, on which:
Fig. 1 is a cross-sectional side view of a bushing produced in accordance with the inventive method,
Fig. 2 is a cross-section taken along II-II in fig. 1, and
Fig. 3 is a cross-sectional side view of a fuse canister produced in accordance with the inventive method.

### DETAILED DESCRIPTION OF THE INVENTION

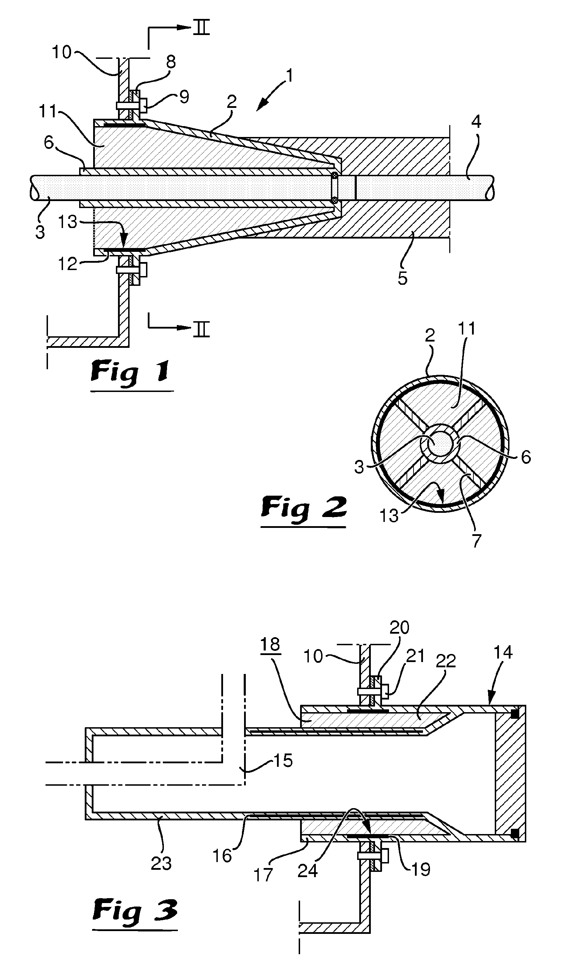

Fig. 1 shows a bushing 1 produced by means of the inventive method. The bushing 1 comprises a tubular outer shell 2 made of a polymer. In a first end thereof, the outer shell 2 is connected to voltage-carrying element 3 that extends through the bushing. The voltage-carrying element 3 defines a conductor that, during operation of the bushing 1, will be connected in one end to a mating conductor 4, preferably the conductor of a cable. The sleeve or sock 5, preferably made of rubber, will be provided in a way known per se as a further electric insulation in the region of the joint between the voltage-carrying element 3 of the bushing 1 and the mating conductor 4.

The bushing 1 also comprises an inner sleeve 6 that extends from the end region in which the outer shell is connected to the conductor 3 of the bushing 1, tightly enclosing the conductor 3. The inner sleeve 6 is made of the same resin as the outer shell 2 and has been produced in the same moulding process as the latter. In fact, the inner sleeve 6 and the outer shell 2 form one and the same integrated body that surrounds and encloses the conductor 3 that extends through said body. In the end in which the outer shell 2 is connected to the conductor 3 it merges with the inner sleeve, and from said end, as seen in the longitudinal direction of the outer shell 2, said shell extends in accordance with the outer periphery of a truncated cone, leaving a spacing between its inner peripheral surface and the outer peripheral surface of the inner sleeve 6 and, accordingly, the conductor 3. In this embodiment, the inner sleeve 6 has a length in the longitudinal direction thereof corresponding to, and even slightly exceeding, the length of the outer shell 2. However, other solutions are also conceivable.

As can be seen in Fig. 2, there are also provided strengthening elements 7 extending between the inner sleeve 6 and the outer shell 2. The strengthening elements 7 may be struts or, as here, fins extending also in the longitudinal direction of the bushing, and provided for the purpose of increasing the mechanical strength and rigidity of the bushing 1. Preferably, the strengthening elements 7 extend from the region in which the inner sleeve 6 merges with the outer shell 2 to an opposite end of the outer shell 2 as seen in the longitudinal direction of the latter. Preferably, the strengthening elements 7 are formed by the same material and in the same moulding process as the outer shell 2 and the inner sleeve 6. They divide the space between the inner sleeve 6 and the outer shell 2 in a plurality of sectors. In order to generate said elements 7, a corresponding plurality of core-elements may be used during the moulding of the bushing 1.

The bushing 1 is also provided with means for the connection thereof to the wall or the like through which the bushing 1 is to extend when in its operative position. Such connection means may, as in this embodiment, comprises a projection or flange 8 projecting in a radial direction from the outer periphery of the outer shell 2, and fastening means such as a bolt or screw 9 for the fastening of said projection or flange 8 against said wall, here indicated with reference number 10.

The end in which the outer shell 2 is connected to the conductor 3, or merges with the inner sleeve 6 forms a gas-tight seal that separates the space between the sleeve 6 and the shell 2 from an outer surrounding atmosphere.

The space between the shell 2 and the sleeve 6 is filled with a further insulating material or filler 11. The filler is made of an electrically insulating material other than the resin forming the outer shell 2, the inner sleeve 6 and the strengthening elements 7. Since the shell 2, sleeve 6 and strengthening elements 7 may server as the main load-carrying part of the bushing, the material of the filler 11 may be optimised for its purpose as an electrically insulating and discharge-preventing element. The filler 11 preferably fills the entire cross-section of the space between the sleeve 6 and the shell 2 along a predetermined length thereof, preferably the entire length of thereof. The filler may comprise any material suitable for the purposes, such as an elastomer or a rubber, and may be in a fully solid or gel-like state. Solutions in which the filler is in a liquid state may also be conceived, but then there must be provided some sort of enclosure, such that the filler is retained in said space. Preferably, the filler is introduced in said space after moulding of the resin that forms the load-carrying part of the bushing. The filler may be introduced into said space as late as when the bushing 1 has been mounted in its operative position. Preferably, the filler 11, is turned towards the interior of a container or station the wall of which the bushing 1 penetrates in its operative position, and is separated from the atmosphere by the above-mentioned seal formed by the shell 2, the sleeve 6 and the conductor 3.

In the outer shell 2 there is provided a screen 12 formed by an annular or tubular piece of an electrically conducting material such as metal. The screen has the task of suppressing or controlling an electric field generated by and extending around the conductor 3. The screen 12 is coaxial with the outer shell 2 and at least partly embedded therein. Its inner peripheral surface 13 is, however, exposed to and covered by the filler 11 provided in the space between the outer shell 2 and the sleeve 6. There may also be provided electric connection elements (not shown) such as threads or the like by means of which the screen 12 is connected to ground and/or any further equipment. The screen 12 extends in the region of the shell 2 in which the latter is provided with its projection or flange 8, thereby intersecting the plane of a wall to which the bushing 1 is to be connected when in its operative position. The end portions of screen 12 are covered by the material of the shell 2, such that it is only the inner peripheral surface of the screen 12 that is exposed to the filler 11.

The bushing 1 is formed in the following way. There is provided a mould in which moulding of the resin of the bushing 1 into the final, or nearly final, shape of the bushing 1 is to be performed. The conductor 3 is mounted in the mould, and around the mould separated core parts are arranged in a pattern resulting in an empty volume within the mould having a geometry corresponding to that of the polymer parts described previously. A resin, such as poly amide, is then introduced into the mould under high pressure, typically through an injection moulding procedure known per se, after which the injected resin is permitted to solidify.

After solidification of the resin, the core parts generating the space between the inner sleeve 6 and the outer shell 2, as well as between the individual strengthening elements 7, are removed, and finally the filler 11 is introduced into the said space and permitted to completely fill the latter. This last step may either be performed before or after mounting of the bushing in its operative position in a wall. The filler 11 may be in a liquid, semi-solid or solid state when introduced into said space, and may then, depending of what specific material that it comprises, be permitted to solidify or, if not solidified, be further enclosed in said space, for example by means of a sealing element.

Fig. 3 shows another embodiment of a device according to the invention, more precisely a fuse canister 14. The fuse canister 14, like the bushing 1 previously described, comprises a thin-walled body made of a resin that, preferably, has been injection moulded. The fuse has been omitted for the sake of clarity. It should be understood that a fuse is to be inserted into the canister 14 from the right in fig. 3, and that, when the fuse is in place, an electric conductor 15 will extend through the canister as shown by the dotted line in fig. 3. The conductor 15 passes through the canister wall at a short end thereof opposite to the end from which the fuse is to be inserted. It extends a distance through the interior of the canister 14 and passes through the mantle wall thereof.

Likewise to the above-described bushing, the canister 14 is to be connected to a wall 10 of a container. The connection between wall 10 and canister 14 is beyond the site in which the electric conductor 18 passes through the mantle wall of the canister as seen from the left in fig. 3. The conductor 15 itself does not pass through the plane of the intersecting wall 10.

In order to suppress the electric field generated by the conductor 15 in a region inside the canister extending from the region of the conductor 15 to the fuse-insertion end of the canister 14, there is provided a shield 16 made of an electrically conducting material embedded in the mantle wall of the canister 14. Said shield 16 may, as here, be made of a thin metal sheet or net of annular shape. The shield 16 extends through the canister wall in the region of the intersection plane between wall 10 and the canister 14. Accordingly, it protrudes through an opening in said wall 10. Moreover, the shield 16 is in electric contact with the conductor 15 by being exposed to a through hole in the mantle wall through which the conductor 15 is to pass (even though not clearly shown in fig. 3). During operation, when a medium or high voltage is applied to the conductor 15, the shield 16 will adopt the same voltage as the conductor 15.

The canister 14 could be described as being comprised by an electrical insulation part mainly made of a polymer and a voltage carrying element 16 formed by the shield described above. In the intersection region or plane between the wall 10 and the voltage carrying element 16 it is of utmost importance to have satisfying insulation properties in order to prevent any short circuit from appearing between the voltage carrying element 16 and the wall 10. Therefore, the voltage-carrying element 16 is surrounded by an outer tubular shell 17 formed by said insulation part, wherein, at least along a part of the length of the voltage-carrying element 16, the outer shell 17 extends with a spacing between its inner periphery and the outer periphery of the voltage-carrying element 16, thereby defining a space 18 therebetween. In particular, the spacing and said space 18 should be provided in the region in which the voltage-carrying element 16 is to protrude through the wall, i.e. in the intersection plane between wall 10 and canister 14.

Likewise to the bushing 1 shown in figs. 1 and 2, there is provided a screen 19 in the tubular outer shell 17 for the purpose of suppressing an electric field in said space 18. The screen 19 comprises a tubular, or annular, piece of an electrically conducting material, preferably a metal. The inner periphery thereof is exposed to said space 18, since the screen 18, likewise to the screen of the bushing 1, has been permitted to rest against a core part of a mould during the moulding of the surrounding resin. Likewise to the bushing 1, the canister 14 Is provided with a flange 20 and fastening elements 21 such as bolts or screws for the fastening of the canister 14 to the wall 10, and the screen 18 intersects the extension plane of the wall 10, when the canister 14 is connected thereto via said flange 20 and fastening elements 21.

The space 18 is filled with a filler 22 comprising an electrically insulating material other than the resin forming the outer shell 17. The filler 22 may, for example comprise a mouldable elastomer such as poly urethane. As an alternative, the filler 22 may comprise a gel, solid enough to stay in place in said space during use of the canister 14. The filler 22 completely fills the open space between the outer shell 17 and the voltage-carrying element 16, leaving no air pockets or voids.

The voltage-carrying element 16 may be embedded in or at least be supported by an inner sleeve 23 which is a part of the insulation part. Preferably, the inner sleeve 23 defines a tubular body into which a fuse is to be inserted and the interior of which is accessible from outside via the fuse insertion end thereof. The outer shell 17 is connected to the inner sleeve 23, and thereby to the voltage carrying element 16, preferably in the region of the fuse-insertion end of the canister 14.

The canister 14 is produced in a manner corresponding to that described previously for the bushing 1, though with a different mould design and core design in order to provide a body with a shape corresponding to that of the canister 14. The screen 19 is permitted to take support with its inner peripheral surface 24 against a core part of the mould during the injection moulding process in order to retain said screen 19 firmly in a fixed position. In this context it should be emphasized that also the voltage carrying element 16 has the shape of a tubular sleeve and actually also acts as a screen in order to suppress an electric field existing inside said sleeve during operation, and that, accordingly, also the voltage carrying element 16 may be positioned in supporting contact with a part of the mould during moulding of the canister 14, preferably with its outer periphery in supporting contact with an inner periphery of the same core as the one against which the screen 19 takes support with its inner periphery.

It should be understood that the invention only has been described by way of example, and that alternative embodiments may be obvious for a person skilled in the art. However, the scope of protection is only limited by the enclosed claims, supported by the description and the drawing.

For example, when regarding the scope of protection covered by the independent claims, it should be understood that "outer shell" most not be regarded as the outermost shell, but that there might be further shells provided outside said outer shell as seen in a radial direction of the devices in question. However, it is preferred that the outer shell in fact is the outermost shell.

In the embodiments described above, said resin is, preferably, a thermoplastic resin. Accordingly, said polymer formed by said resin is a thermoplastic polymer.

It should also be noted that, though the invention has been described with regard to preferred embodiments in which the extension plane of a the wall 10 intersects the position of the screen 12, 24 and the position of a voltage-carrying element 3, 16 around which the screen 12, 24 is arranged, the principles of the invention are also applicable to other designs, for example those where neither the screen nor the voltage-carrying element is intersected by said extension plane.

## Claims

1. A method of producing an electric power device (1, 14) comprising a tubular shell (2, 17) of an electrically insulating polymer in which there is provided a screen (12, 19) of an electrically conducting material, wherein
- said screen (12, 19) is placed in a mould,
- the mould is filled with a resin, and
- the resin is permitted to solidify in said mould, **characterised in that**
- the screen (12, 19) is positioned in said mould such that a peripheral surface (13, 24) thereof is in supporting contact with a part of said mould.

2. A method according to claim 1, **characterised in that** the part of the mould against which the screen (12, 19) is in supporting contact is a core part thereof.

3. A method according to claim 1 or 2, **characterised in that** said screen (12, 19) is formed by an annular element.

4. A method according to any one of claims 1-3, **characterised in that** it is an inner peripheral surface (13, 24) of the screen (12, 19) that is arranged in supporting contact with said part of the mould.

5. A method according to any one of claims 1-4, **characterised in that** part of the mould against which the screen (12, 19) has been in supporting contact during moulding is removed from the screen (12, 19), and that the exposed surface of the screen (12, 19) is covered by an electrically insulating material (11, 22).

6. A method according to any one of claims 1-5, **characterised in that** said tubular shell (2, 17) surrounds a central part (6, 23) of said power device in which a voltage-carrying element (3, 19) of an electrically conducting material is to be housed, and that the surface (13, 24) with which said screen (12, 19) is in supporting contact with said part of the mould faces said central part and is remote from the latter.

7. A method according to claim 6, **characterised in that**, after removal of said part of the mould, a spacing between said surface of the screen (12, 19) and said central part (6, 23) is filled with an insulating material (11, 22) other than said polymer.

8. A method according to any one of claims 1-7, **characterised in that** the resin is introduced into the mould under elevated pressure.

9. A method according to any one of claims 1-8, **characterised in that** said resin is introduced into the mould through an injection moulding process.

10. A method according to any one of claims 1-9, **characterised in that** said resin is a thermoplastic resin.

11. An electric power device, **characterised in that** it is produced in accordance with any one of claims 1-10.

12. An electric power device according to claim 11, **characterised in that** said electric power device is a bushing (1).

13. An electric power device according to claim 11, **characterised in that** said electric power device is a fuse-canister (14).
